# FASCICULE DE BREVET EUROPEEN

(11) **EP 1 961 247 B1**
(45) Date de publication et mention de la délivrance du brevet: **17.02.2010**
(21) Numéro de dépôt: 06778042.9
(22) Date de dépôt: 28.07.2006
(51) Int. Cl.: H04W 8/24, G06F 9/445

(54) **TELECHARGEMENT DE DONNEES INITIE PAR DES OBJETS COMMUNICANTS PORTABLES PENDANT UNE CAMPAGNE**
DURCH TRAGBARE KOMMUNIKATIONSOBJEKTE WÄHREND EINER KAMPAGNE EINGELEITETES DATENHERUNTERLADEN
DATA DOWNLOADING INITIATED BY PORTABLE COMMUNICATING OBJECTS DURING A CAMPAIGN

(30) Priorité: 28.07.2005 FR 0552365
(43) Date de publication de la demande: 27.08.2008
(73) Titulaire: Gemalto SA, 92190 Meudon (FR)
(72) Inventeur: MARTINENT, Frédéric, F-13011 Marseille (FR); BRETAGNE, Eric, F-13080 Luynes (FR); AMIEL, Patrice, F-13290 Aix-les-milles (FR)
(86) Numéro de dépôt international: PCT/EP2006/064770
(87) Numéro de publication internationale: WO 2007/012662

(56) Documents cités:
- EP-A- 1 528 723
- WO-A-2005/050441
- US-B1- 6 577 614

## Description

La présente invention concerne le téléchargement de données depuis un serveur dans des objets communicants portables à travers un réseau de radiocommunications pendant une campagne de téléchargement. En particulier, elle a trait à un téléchargement de données initié par les objets communicants portables. Les objets communicants sont des cartes à puce, telles que des cartes UICC (Universal Integrated Circuit(s) Card) munies de l'application USIM (Universal Subscriber Identity Module), associées aux terminaux mobiles du réseau de radiocommunications qui est par exemple du type GPRS (General Packet Radio Service) ou UMTS (Universal Mobile Telecommunications System).

Le serveur de téléchargement de données, également appelé plateforme d'administration de cartes OTA (Over The Air), comprend un logiciel qui permet à l'opérateur gérant le réseau de radiocommunications de conserver le contrôle des cartes à puce dans les terminaux mobiles et de modifier leur contenu. Ces opérations à l'initiative de l'opérateur (mode push) concernent par exemple le téléchargement d'un fichier dans des cartes prédéterminées du parc géré par l'opérateur, ou le téléchargement ou l'effacement d'une application déterminée, ou bien la modification de données d'un fichier ou d'une application déterminée dans des cartes gérées par l'opérateur.

L'invention s'intéresse plus particulièrement à une campagne de téléchargement massif de données des cartes d'usager, bien que le serveur de téléchargement de données OTA puisse opérer un téléchargement unitaire dans une carte d'usager.

Selon un premier exemple, un téléchargement est relatif à un unique fichier personnel qui est destiné à des usagers itinérants se trouvant fréquemment à l'étranger et qui contient plus d'une dizaine d'identificateurs de réseaux préférés gérés par des opérateurs avec lesquels l'opérateur du réseau gérant les cartes a contracté. Le fichier d'identificateurs de réseaux préférés est unique et a vocation à être téléchargé dans de nombreuses cartes d'usager prédéterminées de manière à ce que les usagers de ces cartes puissent l'utiliser lorsqu'ils sont à l'étranger.

Pour ce premier exemple, l'opérateur a actuellement deux possibilités pour télécharger ce fichier depuis le serveur OTA. Selon une première possibilité, l'opérateur décide de télécharger le fichier de manière unitaire, au fil de l'eau, la première fois qu'un usager intéressé est en itinérance (roaming), et ainsi de suite pour tous les usagers les uns après les autres, qui sont en itinérance. Selon une deuxième possibilité, dit en mode de campagne, le serveur envoie le fichier des identificateurs de réseaux préférés au cours d'une seule campagne vers les cartes dont les usagers ont souscrit à une option d'itinérance.

En mode campagne le nombre d'usagers ciblés peut atteindre plusieurs centaines de milliers ou millions.

Selon un deuxième exemple, un téléchargement concerne une application facilitant la gestion du répertoire des numéros téléphoniques dans les cartes. Cette application permet à un usager de sauvegarder tout son répertoire dans un serveur prédéterminé géré par l'opérateur chaque fois que l'usager enregistre un nouveau numéro téléphonique dans sa carte.

Selon ce deuxième exemple, trois possibilités sont offertes. Suite à une publicité présentée à la télévision, l'usager appelle pendant la journée le centre d'appel de l'opérateur pour demander de télécharger l'application dans sa carte. Cette opération est une opération unitaire déclenchée dans le serveur OTA par l'opérateur en mode d'"Assistance Client" (Customer Care). Selon une deuxième possibilité, l'usager prend l'initiative de commander des téléchargements en consultant lui-même depuis son terminal mobile le site de l'opérateur de manière à déclencher le téléchargement de l'application dans la carte. Ce téléchargement est également une opération unitaire commandée dans le serveur OTA par l'usager en mode dit "Auto-Assistance" (Self Care). Selon une troisième possibilité, l'opérateur déclenche une opération de téléchargement en mode campagne sur plus d'un million d'usagers ciblés afin que le serveur OTA administre le téléchargement de l'application dans le million de cartes.

Pour tous les téléchargements ci-dessus depuis le serveur de téléchargement OTA, l'établissement d'un canal de communication entre le serveur et une carte pendant une campagne de téléchargement est décidé par l'opérateur et initié dans le serveur. Ces téléchargements fonctionnent en "mode push".

Selon une première réalisation du mode push, le téléchargement se fait par l'envoi d'une série de messages courts SMS, formatés par le serveur de téléchargement en fonction d'un protocole connu vers une carte, puis envoyés à la carte à travers un réseau de radiocommunications de type GSM de l'opérateur. Cette réalisation est décrite dans la demande de brevet français 0410225 déposée le 27 septembre 2004 par le demandeur et non publiée, intitulée "Campagne de téléchargement de données dans des objets communicants portables". L'établissement de la communication du mode push qui requiert l'utilisation de la technologie SMS, est un inconvénient pour les réseaux dont les infrastructures ne supportent pas les messages courts ou pour lesquels les messages courts ne satisfont pas les normes nécessaires à une mise à jour distante par exemple de cartes dans des réseaux CDMA (Code Division Multiple Access). Un autre inconvénient est l'indisponibilité des cartes dont les terminaux sont éteints ou hors de la couverture du réseau de radiocommunications pendant la campagne.

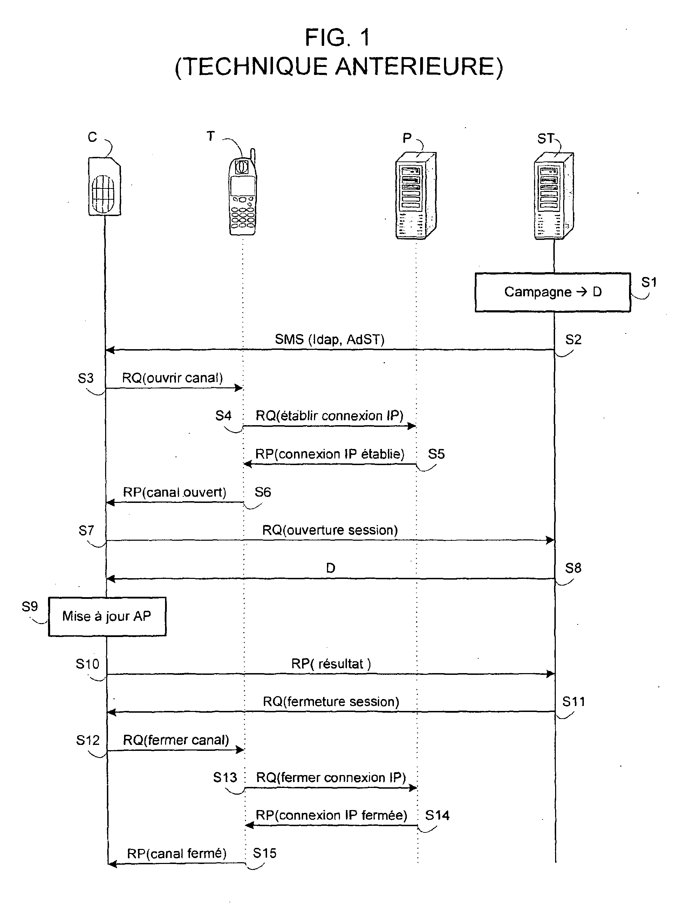

Pour remédier à ces inconvénients, une deuxième réalisation illustrée à la **figure 1** et en rapport avec l'invention, consiste en un téléchargement depuis la partie fixe d'un réseau de radiocommunications de nouvelle génération de type GPRS ou UMTS à travers un canal de données type IP (Internet Protocol).

Un serveur de téléchargement ST initie une campagne, à l'étape S1, pour télécharger des données D vers de nombreuses cartes par l'envoi, à l'étape S2, d'un message court dit "SMS de push" à destination des cartes. Le message SMS contient un identificateur Idap de l'application concernée par la campagne et optionnellement l'adresse AdST du serveur de téléchargement ST. Dès qu'une carte C a reçu le message SMS, elle ouvre, aux étapes S3 à S6, un canal de communication avec le terminal mobile T ayant accueilli la carte, et une passerelle P du type GGSN (Gateway GPRS Support Node) d'un réseau de données. A l'étape S3, la carte envoie une requête RQ au terminal T pour ouvrir un canal de communication. Le terminal T transmet, à l'étape S4, une requête pour établir une connexion de type IP à la passerelle P du réseau de radiocommunications. A l'étape S5, la passerelle P transmet au terminal T une réponse RP indiquant que la connexion IP est établie. A l'étape S6 le terminal transmet à la carte une réponse indiquant que le canal de communication est ouvert. Ainsi, à l'étape S7, la carte ouvre une session pour communiquer directement avec le serveur de téléchargement ST qui télécharge, à l'étape S8, le contenu D défini dans la campagne vers la carte C. Cette dernière met à jour une application AP concernée par le téléchargement à l'étape S9 et envoie en réponse, à l'étape S10, le résultat du téléchargement au serveur ST. En fin de téléchargement à l'étape S11, le serveur ST ferme la session par exemple par l'envoi d'une requête de fermeture de session. A la réception de la requête de fermeture de session, la carte ferme son canal de communication avec le terminal et la passerelle P aux étapes S12 à S15 analogues aux étapes S3 à S6.

Le mode push implique quelques contraintes ou limitations liées à la disponibilité des cartes sur le réseau de radiocommunications. Les demandes de téléchargement pour toutes les cartes indisponibles au moment précis de l'exécution de la campagne sont mises en échec et sont traitées ultérieurement par un mécanisme de nouvel essai. A la fin de la campagne, toutes les cartes n'ont pas été atteintes puisque certaines cartes ne se sont pas connectées au réseau pendant la période de nouvel essai.

Lors d'un téléchargement en mode campagne, le changement très fréquent de l'affectation d'une partie des cartes n'est pas considéré dans la gestion par le serveur d'une liste de cartes ciblées. En effet, au cours de la campagne de téléchargement, de nouveaux abonnés et donc de nouvelles cartes apparaissent sur le réseau, des abonnés existants changent de carte et des cartes inutilisées ou utilisées dans d'autres réseaux disparaissent du réseau. En conséquence, comme la campagne s'étale sur plusieurs jours à plusieurs mois, la liste de cartes ciblées n'est pas ré-actualisée pendant toute la durée de la campagne.

En outre, une campagne de téléchargement s'effectue souvent de façon massive (quelques millions de cartes) sur une durée relativement courte pouvant aller de quelques jours à quelques mois et conduit ainsi à un pic de trafic sur le réseau de radiocommunications. Pendant cette période, le réseau est fortement sollicité et nécessite une infrastructure bien dimensionnée, capable de supporter une surcharge temporaire. La gestion des nouveaux essais sans savoir si le terminal mobile portant la carte est à nouveau sous la couverture du réseau accroît encore la surcharge du réseau.

Le document WO 2005/050441 décrit un procédé de téléchargement de données tel que décrit dans le préambule de la revendication 1. Ce procédé comprend l'envoi d'une requête de téléchargement depuis un téléphone portable, cette requête identifiant la version du logiciel présente dans le téléphone ainsi que les parties du logiciel qui ont été corrompues dans le téléphone. Les parties du logiciel corrompues sont alors transmises au téléphone ainsi que les parties du logiciel à mettre à jour.

Le document US-6577614 décrit un système de télécommunications de type CDMA où des paramètres de mise à jour sont transmis d'un serveur à un terminal mobile via OTA. L'utilisateur du terminal mobile décide avec l'opérateur de réseau des mises à jour qui doivent être téléchargées.

La présente invention concerne un procédé conforme à la revendication 1.

L'invention présente une meilleure répartition de la charge du réseau, les communications entre les objets communicants portables et le moyen serveur pendant la campagne de téléchargement s'effectuant au gré d'éléments de déclenchement d'envoi de requête dans les objets communicants, comme des événements prédéterminés dans chacun des objets communicants indépendamment des événements prédéterminés dans les autres objets communicants, et non d'une manière systématique. L'invention est également avantageuse par une réduction significative des risques d'échec des opérations de mise à jour des objets communicants portables puisque ces derniers initient le téléchargement seulement lorsqu'ils sont sous la couverture du réseau de radiocommunications.

Selon une première réalisation de l'invention, lorsque l'un des dispositifs est l'objet communicant portable, à la réception des données de contenu provenant du moyen serveur, l'objet communicant portable traite les données de contenu reçues et envoie une notification au moyen serveur.

Un autre avantage de l'invention est de s'affranchir de la gestion des listes d'objets communicants dans le moyen serveur, le téléchargement de données de contenu étant effectué sur des caractéristiques fonctionnelles et structurelles des objets communicants ; par exemple, des données sont téléchargées vers tous les objets communicants portables ayant un profil spécifique ou vers tous les objets communicants ayant suffisamment de place mémoire pour accueillir une nouvelle application.

Un autre objectif de l'invention est un système pour télécharger des données de contenu mises à disposition dans un moyen serveur vers des objets communicants portables à travers un réseau de radiocommunications pendant une campagne de téléchargement de données. Le système de communication est caractérisé en ce qu'il comprend dans chaque objet communicant portable un moyen pour initier un téléchargement de données vers ledit objet par un envoi d'une requête de disponibilité de contenu vers le moyen serveur dès qu'au moins un élément de déclenchement d'envoi de requête satisfait une règle mémorisée dans l'objet communicant portable, et un moyen dans l'un des dispositifs incluant le moyen serveur et l'objet communicant portable pour déterminer si des données de contenu sont disponibles pour l'objet communicant portable afin de les lui transmettre.

Les objets communicants peuvent être des cartes à puce d'usager amovibles de terminaux mobiles, ou bien des terminaux mobiles.

Selon une réalisation préférée, le système comprend un réseau à accès multiple à répartition par codes CDMA par exemple UMTS ou UTRAN. Selon une autre réalisation, le système comprend un réseau GSM adossé à un réseau GPRS.

L'invention peut ne pas recourir à une infrastructure comportant un serveur de messages courts. Le système de l'invention peut comprendre un réseau par paquets sans utiliser des messages courts.

Enfin, l'invention se rapporte à un programme apte à être mis en oeuvre dans le système de communication pour télécharger des données de contenu mises à disposition dans un moyen serveur vers des objets communicants portables à travers un réseau de radiocommunications pendant une campagne de téléchargement de données. Le programme comporte des instructions pour initier par un objet communicant portable un téléchargement de données vers ledit objet par un envoi d'une requête de disponibilité de contenu vers le moyen serveur dès qu'au moins un élément de déclenchement d'envoi de requête satisfait une règle mémorisée dans l'objet communicant portable, et des instructions pour déterminer dans l'un des dispositifs incluant le moyen serveur et l'objet communicant portable si des données de contenu sont disponibles pour l'objet communicant portable afin de les lui transmettre.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un algorithme d'un procédé de téléchargement de données selon la technique antérieure, initié par un serveur de téléchargement de carte vers une carte à puce, avec échange de requêtes et réponses entre le serveur de téléchargement et la carte à puce;
- la figure 2 est un bloc-diagramme schématique d'un système de communication reliant des objets communicants portables et un serveur d'administration d'objet communicant géré par un opérateur de réseau, pour la mise en oeuvre du procédé de téléchargement selon l'invention ;
- la figure 3 est un bloc-diagramme schématique plus détaillé relatif à la figure 2 ;
- la figure 4 est un algorithme d'une première réalisation du procédé de téléchargement selon l'invention, avec échange de requêtes et réponses entre le serveur d'administration et l'objet communicant portable ; et
- la figure 5 est un algorithme d'une deuxième réalisation du procédé de téléchargement selon l'invention, avec échange de requêtes et réponses entre le serveur d'administration et l'objet communicant portable.

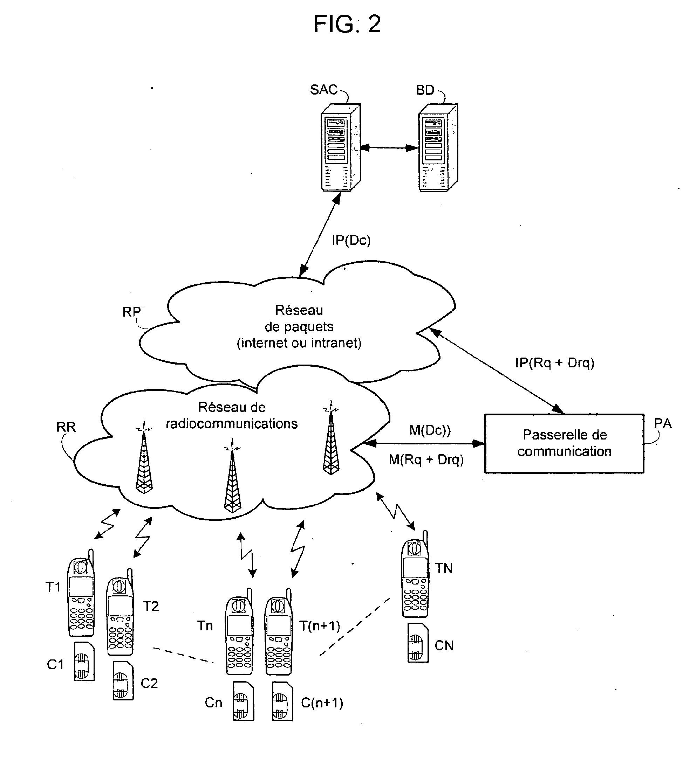

Dans la figure 2 sont représentés des moyens principaux pour télécharger des données dans des objets communicants portables, tels que des cartes à puce d'usager amovibles C1 à CN qui sont associées respectivement à des terminaux radio mobiles T1 à TN, rattachés à un réseau de radiocommunications cellulaire numérique RR. La carte à puce Cn associée au terminal mobile Tn, avec l'indice n tel que 1 ≤ n ≤ N, est du type UICC (Universal Integrated Circuit (s) Card). La carte à puce est munie par exemple d'une application SIM (Subscriber Identity Module) lorsque le réseau RR est du type GSM, ou d'une application USIM (Universal Subscriber Identity Module) lorsque le réseau RR est à accès multiple à répartition par codes CDMA (Coded Division Multiple Access) de la troisième génération (3GPP) du type UMTS (Universal Mobile Telecommunications System) ou UTRAN (UMTS Terrestrial Radio Access Network).

Un serveur d'administration de carte SAC selon l'invention est géré par l'opérateur du réseau RR et constitue une plateforme OTA (Over The Air). Selon la réalisation illustrée à la figure 2 à laquelle on se référera ci-après, les cartes C1 à CN associées aux terminaux mobiles respectifs T1 à TN transmettent des requêtes de disponibilité de contenu Rq pouvant être accompagnées de données Drq associées vers le serveur SAC et reçoivent des données de contenu Dc transmises par le serveur SAC, à travers une passerelle de communication PA.

La passerelle comporte une passerelle d'accès pour communiquer avec le serveur SAC à travers un réseau de paquets RP à haut débit, tel que l'internet, ou tel qu'un réseau intranet propre à l'opérateur du réseau RR. Une autre passerelle d'accès de la passerelle de communication PA communique avec au moins un commutateur du service mobile, à travers bien souvent un réseau d'accès tel qu'un réseau de paquets de type X.25 ou un réseau RNIS (Réseau Numérique à Intégration de Service) ou ATM (Asynchronous Transfert Mode). Les requêtes de disponibilité de contenu Rq et les données Drq associées sont transportées dans des messages M par un terminal mobile Tn à destination du serveur SAC et sont formatées dans la passerelle PA en des paquets IP (Internet Protocol) transmis vers le serveur SAC ; inversement, des données de contenu Dc sont transmises dans des paquets IP par le serveur SAC à destination du terminal mobile Tn et sont acheminées par la passerelle PA sous la forme de messages M vers le terminal Tn.

Les messages M peuvent encapsuler les paquets IP qui comportent une requête Rq et des données Drq. La passerelle PA extrait les paquets IP des messages M transmis par le terminal Tn pour les transmettre au serveur SAC. Inversement les paquets IP provenant du serveur SAC sont encapsulés dans des messages M pour être transmis par voie radio au terminal Tn.

En variante, la passerelle de communication PA est reliée directement ou est incorporée à un commutateur du service mobile dans le réseau RR.

Selon une autre réalisation, la passerelle de communication PA est un réseau d'accès du type réseau à commutation par paquets avec gestion de la mobilité et accès par voie radio GPRS (General Packet Radio Service), si le réseau de radiocommunications RR est du type GSM. Un noeud de service SGSN (Serving GPRS Support Node) du réseau GPRS est relié à au moins un contrôleur de station de base du réseau RR. Un noeud-passerelle GGSN (Gateway GPRS Support Node) du réseau GPRS est relié au réseau de paquets RP desservant le serveur SAC. L'intérêt de cette réalisation est de transmettre des messages sous forme de paquets avec des débits nettement plus élevés.

Selon encore une autre réalisation, la passerelle de communication PA sert à échanger des messages entre les terminaux radio mobiles et le serveur SAC à travers les réseaux RR et RP selon une liaison par paquets à débit élevé de type internet.

Dans le réseau de radiocommunications RR du type UMTS, ou du type GSM adossé à un réseau GPRS, une requête de disponibilité de contenu Rq associée à des données Drq et les données de contenu Dc sont échangées entre un terminal mobile Tn et la carte associée Cn selon le protocole BIP (Bearer Independent Protocol), ou par l'intermédiaire d'une application (Midlet) dédiée embarquée dans le terminal qui communique avec la carte via un protocole applicatif spécifique, comme par exemple le protocole J2ME (Java 2 Mobile Edition). La requête de disponibilité de contenu Rq associée à des données Drq et les données de contenu Dc sont, par exemple, échangées entre la carte Cn et le serveur SAC selon le protocole de transport CAT-TP (Card Application Toolkit - Transport Protocol) sur un lien UDP/IP (User Datagram Protocol/ Internet Protocol).

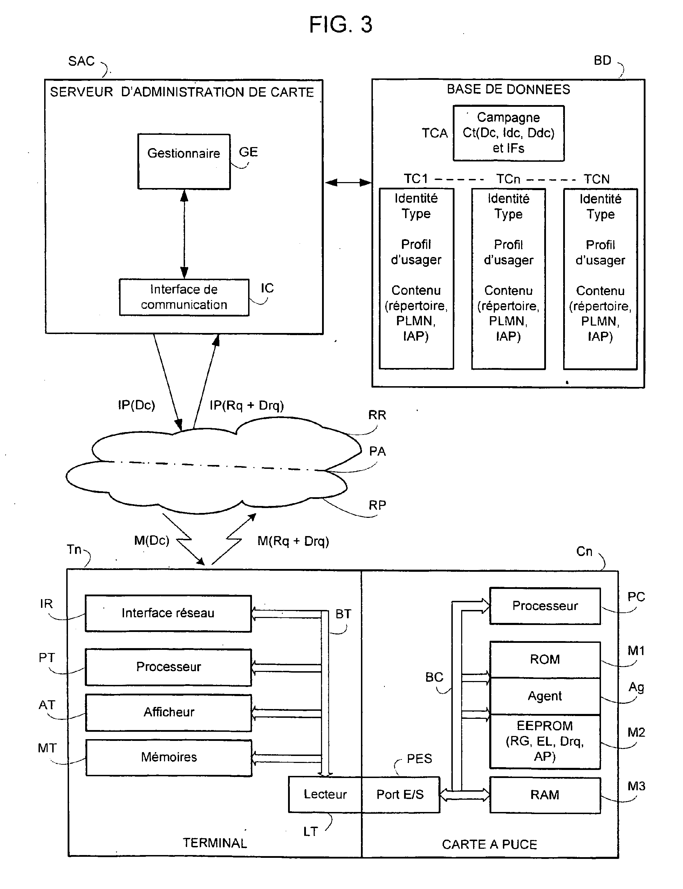

En référence à la **figure 3****,** on a représenté le serveur d'administration SAC, le terminal Tn et la carte à puce Cn sous forme de blocs fonctionnels dont la plupart assurent des fonctions ayant un lien avec l'invention et peuvent correspondre à des modules logiciels et/ou matériels.

Le serveur **d'administration** SAC comprend un gestionnaire GE qui gère diverses opérations au cours du téléchargement et une interface de communication IC pour transmettre et recevoir des paquets IP à travers le réseau de paquets RP.

Le serveur d'administration de carte SAC est lié à une **base de données** BD incluant divers paramètres et caractéristiques des cartes gérées par l'opérateur de réseau de radiocommunications RR.

Chaque carte à puce Cn est associée à une table TCn dans la base de données BD. La table TCn comprend notamment des caractéristiques initiales qui sont liées à l'identité de la carte Cn et au type de la carte et qui sont enregistrées dans la base de données BD dès la mise en service de la carte. Ces caractéristiques initiales sont notamment un numéro de série de la carte, l'identité internationale IMSI (International Mobile Subscriber Identity) de l'usager de la carte, et le numéro téléphonique de l'usager mobile MSISDN (Mobile Station ISDN Number). Le type de la carte Cn est défini notamment par un identificateur du type du processeur inclus dans la carte, l'identificateur du fabricant de la carte, un nombre de bits par mot traité par le processeur, des caractéristiques du système d'exploitation et de la machine virtuelle implémentée dans la carte, etc.

D'autres caractéristiques propres à l'utilisation de la carte et notamment du terminal de l'usager Tn peuvent être également enregistrées dans la table TCn associée à la carte Cn lors de la mise en service de la carte, et peuvent être modifiées lors de l'utilisation de la carte. Ces autres caractéristiques concernent notamment le profil d'abonnement de l'usager de la carte Cn, des données pouvant être modifiées par l'usager ou par l'opérateur gérant la carte telles qu'un répertoire de numéros téléphoniques et d'adresses e-mail, et par exemple un fichier d'identificateurs de réseaux de radiocommunications préférés PPLMN (Preferred Public Land Mobile Network). Ces réseaux identifiés dans le fichier PPLMN sont gérés par des opérateurs avec lesquels l'opérateur du réseau RR auquel est rattachée la carte Cn a passé des accords pour que l'usager de la carte Cn communique à travers ces réseaux lorsque l'usager est en déplacement sur des territoires couverts par ces réseaux.

La table TCn contient également un ou plusieurs identificateurs d'applications IAP qui ont été chargées lors de la mise en service de la carte à puce Cn et/ou ont été téléchargées ultérieurement à sa mise en service. Par exemple une application consiste à modifier le fichier d'identificateurs de réseaux préférés PPLMN. Selon un autre exemple, l'application consiste à effacer ou télécharger une application dans la carte Cn par exemple pour faciliter la gestion du répertoire des numéros téléphoniques dans la carte Cn en permettant à l'usager, chaque fois qu'il enregistre un nouveau numéro téléphonique dans la carte, de sauvegarder tout son répertoire dans un serveur spécifique géré par l'opérateur afin que l'usager puisse retrouver son répertoire sauvegardé lorsqu'il perd la carte Cn ou lorsqu'il change de carte. Une autre application peut servir à modifier des paramètres dans une application déjà téléchargée dans la carte Cn ; par exemple les paramètres à modifier sont une actualisation de tarifs de rechargement et d'unités de communication lorsque l'usager est abonné à un compte prépayé.

La base de données BD, ou en variante le serveur SAC, contient également une ou plusieurs tables de campagne TCA respectivement attribuées à des campagnes. Chaque table de campagne TCA inclut un ou plusieurs contenus Ct à télécharger vers les cartes. Chaque contenu Ct contient des données de contenu Dc à télécharger. Les données de contenu sont par exemple des données de mise à jour d'une application, ou un message publicitaire. Chaque contenu Ct contient également un descriptif Ddc des données Dc et un identificateur Idc du contenu Ct.

Chaque table TCA inclut également des informations de sélection IFs à comparer soit aux données Drq envoyées par la carte, soit à des caractéristiques de la carte Cn mémorisées dans la table TCn, afin de décider si un téléchargement doit être effectué ou non. Les informations IFs sont par exemple un identificateur IAP d'une nouvelle version d'une application à mettre à jour dans la carte, un seuil de crédit de mise à jour autorisé, ou une liste des numéros téléphoniques MSISDN et des adresses des tables associées aux cartes visées par la campagne, qui seront supposées être les N cartes C1 à CN ci-après, et les plages horaires de la campagne.

La base de données BD peut être incorporée au serveur d'administration de carte SAC, ou être indépendante sous la forme d'un serveur de gestion de base de données qui est relié au serveur SAC par un réseau de paquets tel que le réseau RP, c'est-à-dire via l'internet ou via un réseau intranet propre à l'opérateur du réseau RR.

Le **terminal** Tn comprend, outre le lecteur de carte LT, notamment un processeur PT, des mémoires MT, un afficheur AT tel qu'un écran connecté ou intégré au terminal et associé notamment à un clavier connecté ou intégré au terminal, et une interface réseau IR. Les différents éléments du terminal sont reliés entre eux par un bus bidirectionnel BT.

La **carte** à puce Cn comprend principalement un processeur PC, ou plusieurs processeurs, et trois mémoires M1 à M3. La carte échange des commandes, ou requêtes, et des réponses avec le terminal T à travers un port d'entrée/sortie PES et le lecteur LT avec ou sans contact. Les différents éléments de la carte sont reliés entre eux par un bus bidirectionnel BC.

La mémoire M1 est du type ROM ou Flash et inclut le système d'exploitation de la carte.

La mémoire M2 est une mémoire non volatile par exemple EEPROM ou Flash pour notamment mémoriser des clés, des numéros d'identité et d'autres paramètres du profil de l'utilisateur possédant la carte, comme un code PIN et autres données de sécurité. La mémoire M2 comprend également des applications AP de la carte.

La mémoire M2 comprend des règles de déclenchement RG régissant le déclenchement d'une requête de disponibilité de contenu sur la base d'un ou plusieurs éléments de déclenchement EL. Ces éléments de déclenchement sont par exemple des données d'horodatage fournies par une base de temps quotidienne, hebdomadaire ou mensuelle, et/ou des indicateurs d'événements extérieurs tels que le démarrage du terminal, la réception ou l'émission d'un appel, ou le démarrage d'une application AP par l'utilisateur, et/ou des indicateurs de contrôle déduits d'un contrôle sur l'environnement de la carte relatif à un changement de terminal, un passage en itinérance ou un changement de zone géographique. Des indicateurs de contrôle sont couplés à des indicateurs d'événement afin de déclencher un mode d'interrogation par la carte. Les règles de déclenchement RG peuvent être modifiées au cours du temps par le serveur d'administration de carte SAC.

La mémoire M2 comprend également les données Drq qui sont soit liées aux règles déclenchant la requête Rq comme par exemple un changement de la zone géographique où se situe le terminal, soit liées à une application AP résidente dans la carte comme par exemple un identificateur IAP de la version de l'application, soit liées à l'environnement réseau/terminal mobile comme par exemple le type de carte.

La mémoire M3 est une mémoire RAM ou SRAM servant plus particulièrement au traitement de données.

La carte Cn comprend, en outre relativement à l'invention, un module logiciel appelé agent Ag réparti dans les mémoires M1 et M2. Lorsqu'un ou plusieurs éléments de déclenchement EL satisfont une règle de déclenchement RG, l'agent Ag envoie la requête de disponibilité de contenu Rq et les données Drq vers le serveur SAC et reçoit les données de contenu Dc et les traite. L'agent Ag gère également l'ouverture et la fermeture d'un canal de communication entre la carte Cn et le serveur SAC.

En variante, l'agent Ag peut être réparti en plusieurs agents individuels inclus respectivement dans certaines des applications et présentant chacun des fonctionnalités par rapport à l'application respective équivalentes à celles de l'agent général Ag auquel on se réfèrera dans la suite à titre d'exemple.

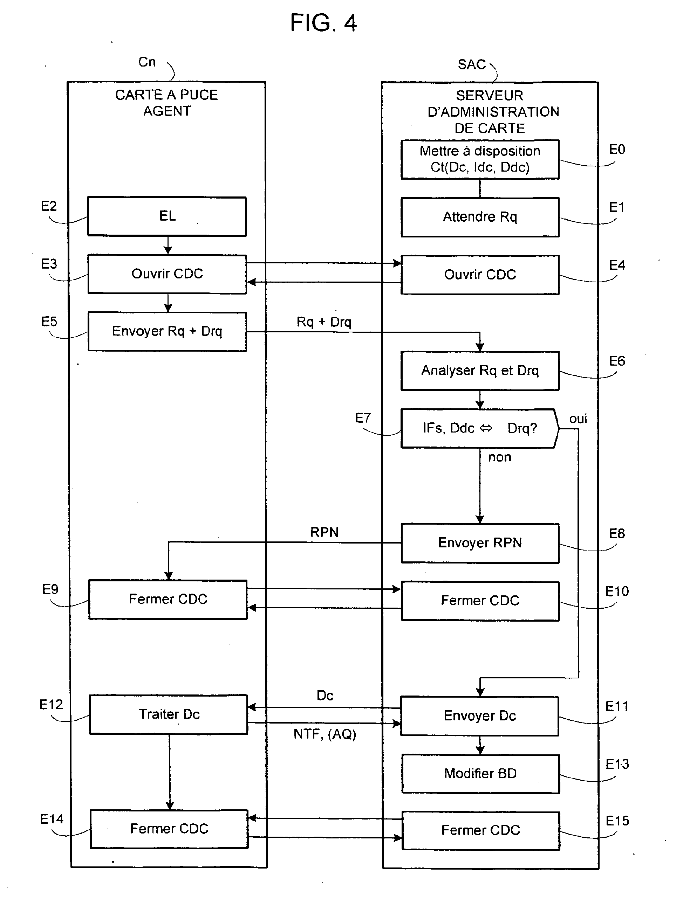

En référence à la **figure 4****, une première réalisation du procédé de téléchargement initié par la carte** Cn selon l'invention comprend des étapes E0 à E15.

A l'étape initiale E0 l'opérateur du réseau de radiocommunications RR met à disposition un ou plusieurs contenus Ct dans la base de données BD dont les données Dc doivent être téléchargées pendant une campagne TCA d'opérations communes de téléchargement de données du serveur d'administration de carte SAC sur un ensemble de cartes spécifiées ou filtrées selon les informations de sélection IFs.

Après la mise à disposition des contenus Ct comportant chacun des données de contenu Dc, un descriptif Ddc et un identificateur de contenu Idc, le gestionnaire GE attend de recevoir une requête de disponibilité de contenu Rq provenant d'une carte à puce, à l'étape E1.

A l'étape E2, un ou des éléments de déclenchement EL satisfaisant une règle RG mémorisée dans la carte Cn sont détectés par l'agent Ag de la carte Cn, comme par exemple le démarrage du terminal Tn ou un temps prédéfini écoulé. Ainsi aux étapes E3 et E4, l'agent Ag ouvre un canal de communication CDC avec le serveur SAC à travers le réseau de radiocommunications RR et le réseau de paquets RP. L'ouverture du canal CDC entre la carte Cn et le serveur SAC comporte des étapes analogues aux étapes S3 à S6 décrites précédemment en référence à la figure 1.

A l'étape E5, l'agent Ag forme une requête de disponibilité de contenu Rq et l'associe à des données Drq. L'agent peut mutualiser les requêtes de disponibilité de contenu de plusieurs applications de la carte Cn en une seule requête Rq en incluant dans les données Drq une liste de paramètres relatifs aux applications concernées. L'agent Ag de la carte Cn commande l'envoi de la requête Rq et des données Drq sous forme d'un message M depuis l'interface réseau IR du terminal Tn. La requête Rq et les données Drq sont ensuite extraites du message M et transmises via la passerelle PA vers le serveur SAC.

A l'étape E6, l'interface de communication IC du serveur SAC reçoit la requête Rq et les données Drq. Le gestionnaire GE du serveur SAC détermine si des données de contenu Dc d'un ou de plusieurs contenus Ct sont disponibles pour la carte à puce Cn par une analyse des données Drq en fonction des informations de sélection IFs et/ou des descriptifs de contenu Ddc de chaque contenu Ct. A l'étape E7, le gestionnaire GE compare les données Drq reçues aux informations de sélection IFs et/ou aux descriptifs de contenu Ddc mémorisés dans la table TCA. Si aucune donnée de contenu Dc n'est mise à disposition pour la carte Cn, c'est-à-dire par exemple si les informations IFs ne comprennent pas l'identité IMSI de la carte parmi les identités IMSI des cartes sélectionnées pour la campagne de téléchargement, alors le gestionnaire GE transmet par l'intermédiaire de l'interface IC, à l'étape E8, une réponse RPN à la carte Cn indiquant qu'aucune donnée Dc n'est mise à disposition de celle-ci.

A la réception de la réponse RPN, l'agent Ag dans la carte Cn ferme le canal de communication CDC avec le serveur SAC aux étapes E9 et E10. La fermeture du canal CDC entre la carte Cn et le serveur SAC comporte des étapes analogues aux étapes S12 à S15 décrites précédemment en référence à la figure 1.

Dans le cas contraire, si des données Drq correspondent à des informations IFs et/ou au descriptif Ddc d'un contenu Ct mis à disposition à l'étape E7, alors le gestionnaire GE transmet à l'étape E11 tout ou partie des données de contenu Dc du contenu Ct. Ces données Dc sont transmises par l'interface de communication IC du serveur SAC dans des paquets IP à destination du terminal mobile Tn couplé à la carte Cn et sont acheminées par la passerelle PA sous la forme d'un ou plusieurs messages M vers le terminal Tn.

A la réception de ces données Dc, l'agent Ag dans la carte Cn traite les données Dc reçues pour chaque application concernée à l'étape E12. Selon un premier exemple, l'agent Ag met à jour la ou les applications AP liées aux éléments de déclenchement détectés à l'étape E2. Selon un autre exemple, les données Dc sont des données publicitaires à afficher sur l'afficheur AT du terminal Tn.

Puis aux étapes E14 et E15 le canal de communication CDC entre la carte et le serveur SAC est fermé de la même manière qu'aux étapes E9 et E10.

A l'étape E12, une notification NTF peut être envoyée au serveur SAC par la carte Cn avant la fermeture E14-E15 du canal CDC. La notification NTF évite que le contenu soit envoyé une deuxième fois à la carte Cn. Ainsi à la réception de la notification NTF à l'étape E11, le serveur SAC confirme par modification dans la base de données BD à l'étape E13 que le contenu mis à disposition a déjà été téléchargé dans la carte Cn.

Une application concrète du procédé de l'invention est la mise à jour d'un portail de service de l'usager de la carte Cn. L'opérateur du réseau RR désire effectuer une mise à jour sur un ensemble de cartes, mais chaque usager ne dispose que d'un crédit de mise à jour limité de son portail. L'opérateur met à disposition sur le serveur SAC, en tant que descriptif de contenu Ddc relatif au contenu Ct, une information décrivant le portail cible, par exemple le numéro de version du portail et en tant qu'informations de sélection IFs des éléments de déclenchement relatifs à la validation du téléchargement, par exemple un crédit de mise à jour suffisant.

La requête de disponibilité de contenu Rq envoyée par la carte Cn est accompagnée des données Drq comportant la version courante du portail, ainsi que le nombre de mise à jour encore autorisée dans la carte.

A la réception de la requête Rq et des données Drq, le gestionnaire GE du serveur SAC vérifie d'abord s'il y a un réel besoin de mise à jour du portail en comparant le numéro de version du portail inclus dans le descriptif Ddc et le numéro de version du portail inclus dans les données reçues Drq. Puis le gestionnaire vérifie s'il est encore possible à l'usager de la carte Cn de mettre à jour son portail en vérifiant le nombre de mise à jour encore autorisée compris dans les données reçues Drq en fonction des informations IFs.

Si le nombre de mise à jour autorisée est égal au crédit de mise à jour des informations IFs, alors le serveur SAC décrémente le crédit de mise à jour et envoie les données de mise à jour du portail de service à la carte Cn qui décrémente le nombre de mise à jour.

Selon un autre exemple, une application concerne la télévision à péage sur terminal mobile pour laquelle l'agent actualise des droits d'accès à des programmes audiovisuels pour l'usager de la carte.

Selon une variante concernant les étapes E5 à E7 de la première réalisation du procédé de l'invention, l'analyse et la comparaison aux étapes E6 et E7 ne sont plus effectuées en fonction des données Drq envoyées avec la requête Rq mais en fonction des caractéristiques de la carte incluses dans la table TCn mémorisée dans la base de données BD.

Ainsi, à l'étape E5, l'agent Ag forme une requête de disponibilité de contenu Rq sans y associer des données Drq et commande l'envoi de la requête Rq depuis l'interface réseau IR du terminal Tn vers le serveur SAC.

Aux étapes E6 et E7, l'interface de communication IC du serveur SAC reçoit la requête Rq. Le gestionnaire GE du serveur SAC détermine si des données de contenu Dc d'un ou de plusieurs contenus Ct sont disponibles pour la carte à puce Cn par une recherche des caractéristiques de la carte Cn mémorisées dans la table TCn en fonction des informations de sélection IFs et/ou des descriptifs de contenu Ddc des contenus Ct.

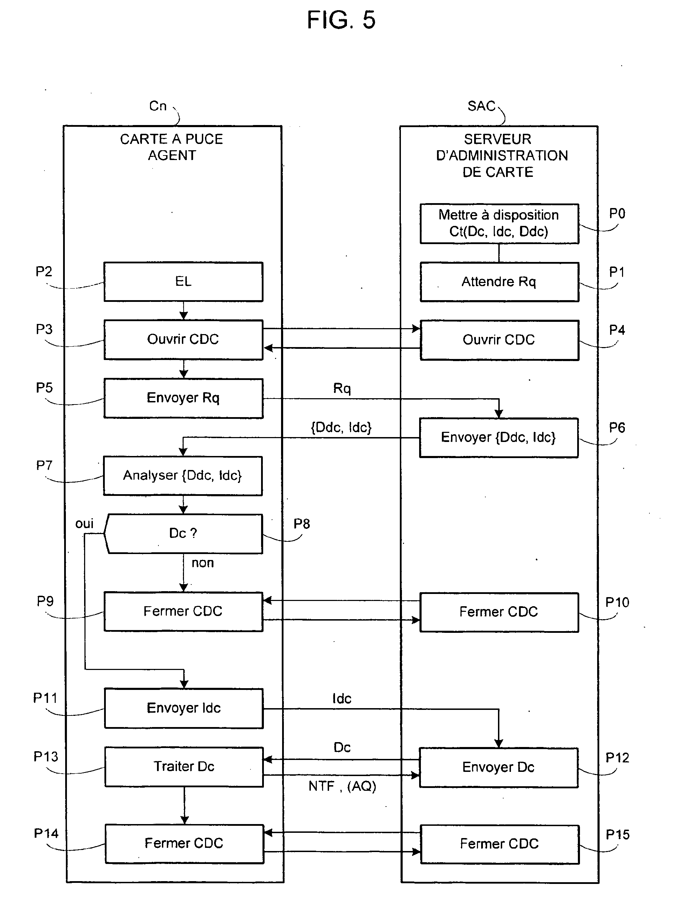

La figure 5 illustre une deuxième réalisation du procédé de téléchargement de données de l'invention. L'algorithme représenté à la figure 5 comprend les étapes P0 à P15. Dans cette deuxième réalisation, le serveur SAC n'est pas connecté à une base de données et comprend outre le gestionnaire GE et l'interface de communication IC, une mémoire contenant les tables de campagnes TCA. Chaque table de campagne TCA comprend un ou plusieurs contenus Ct chacun incluant des données de contenu Dc, un descriptif de contenu Ddc et un identificateur de contenu Idc.

Les étapes P0 à P4 sont identiques aux étapes E0 à E4 référencées dans la figure 3.

A l'étape P5, l'agent Ag forme une requête de disponibilité de contenu Rq et commande l'envoi de la requête Rq sous forme d'un message M depuis l'interface réseau IR du terminal Tn. La requête Rq et les données Drq sont ensuite extraites du message M et transmises via la passerelle PA vers le serveur SAC.

A l'étape P6, en réponse à la requête Rq, le serveur envoie les couples {Ddc, Idc} de tous les contenus Ct qui sont mis à disposition à l'étape E0.

A la réception des couples {Ddc, Idc}, l'agent Ag analyse à l'étape P7 les descriptifs Ddc envoyés en fonction du contenu de la carte, par exemple en fonction des données Drq mémorisées dans la mémoire M2 ou en fonction des caractéristiques ou des identificateurs IAP des applications implémentées dans la carte Cn. L'agent Ag détermine ainsi si des données de contenu doivent être téléchargées à l'étape P8.

Dans le cas où aucune donnée de contenu n'est à télécharger, l'agent Ag dans la carte Cn ferme le canal de communication CDC avec le serveur SAC aux étapes P9 et P10 de la même manière qu'aux étapes E9 et E10 en référence à la figure 4.

Dans le cas contraire à l'étape P8, si des données Dc sont à télécharger, alors l'agent Ag envoie au serveur SAC le ou les identificateurs Idc relatifs respectivement à un ou des contenus Ct incluant les données requises Dc, à l'étape P11.

A l'étape P12, le gestionnaire GE du serveur SAC envoie les données Dc relatives aux identificateurs Idc reçus.

A la réception de ces données Dc, l'agent Ag dans la carte Cn traite les données Dc reçues pour chaque application concernée à l'étape P13. Une notification NTF peut être envoyée à la fin du traitement au serveur SAC lui indiquant le résultat du traitement.

Puis aux étapes P14 et P15 le canal de communication CDC entre la carte et le serveur SAC est fermé de la même manière qu'aux étapes P9 et P10.

Selon une variante relative aux réalisations précédentes du procédé de l'invention, l'agent Ag n'effectue pas directement la distribution des données Dc pour les applications implémentées dans la carte Cn, aux étapes E12 et P13. Le serveur SAC envoie alors successivement dans la carte les données de contenu Dc relatives respectivement aux applications concernées. En pratique pour chaque application concernée, le serveur SAC envoie une commande de traitement des données de contenu en réponse à une notification d'acquittement AQ du traitement de données Dc pour l'application précédente, transmise par la carte Cn.

Lorsqu'une application est répartie entre la carte et le terminal mobile, la partie de l'application dite Midlet dans le terminal mobile interroge périodiquement l'agent individuel relatif à l'application dans la carte afin de détecter un élément de déclenchement EL. Si cet élément de déclenchement est détecté, la Midlet ouvre le canal de communication à l'étape E3, P3 avec le serveur SAC, puis envoie au moins la requête Rq délivrée par l'agent. Ultérieurement à l'étape E11, P12, les données Dc transmises par le serveur sont reçues par la Midlet dans le terminal qui les retransmet à l'agent dans la carte.

Pour les réalisations précédentes et leurs variantes, les échanges des données Dc, des notifications NTF, dés couples {Ddc, Idc}, des identificateurs Idc et des acquittements AQ entre la carte et le serveur peuvent être sécurisés. Ces échanges sécurisés sont effectués par une authentification entre la carte Cn et le serveur SAC et/ou par un chiffrement des différentes données échangées.

L'invention n'est pas limitée à un téléchargement de données dans des cartes à puce du type UICC. Une carte à puce dans laquelle des données sont à télécharger peut être également une carte incluse dans un ordinateur portable relié à un terminal mobile, ou une carte de paiement, une carte de porte-monnaie électronique ou toute autre carte additionnelle incluse dans un terminal mobile. Selon d'autres variantes, l'invention s'applique à d'autres objets électroniques communicants portables, tels que des assistants numériques personnels communicants PDA. L'invention s'applique même à des terminaux mobiles visés par une campagne pour lesquels les données à télécharger peuvent concerner un jeu à enregistrer dans la mémoire non volatile de type EEPROM des terminaux mobiles.

L'invention décrite ici concerne un procédé et un système pour télécharger des données de contenu mises à disposition dans un moyen serveur vers des objets communicants portables. Selon une implémentation préférée, les étapes du procédé de l'invention sont déterminées par les instructions d'un programme incorporé dans le système et en particulier pour partie dans le moyen serveur et pour partie dans les objets communicants portables. Le programme comporte des instructions de programme qui, lorsque ledit programme est chargé et exécuté dans le système dont le fonctionnement est alors commandé par l'exécution du programme, réalisent les étapes du procédé selon l'invention.

En conséquence, l'invention s'applique également à un programme, notamment un programme sur ou dans un support d'informations, adapté à mettre en oeuvre l'invention.

## Revendications

1. Procédé pour télécharger des données de contenu (Dc) mises à disposition dans un moyen serveur (SAC, BD) vers des objets communicants portables (C1 - CN) à travers un réseau de radiocommunications (RR) pendant une campagne de téléchargement de données (TCA), comprenant une initiation dans un objet communicant portable (Cn) d'un téléchargement de données vers ledit objet par un envoi (P5) d'une requête de disponibilité de contenu vers le moyen serveur dès qu'au moins un élément de déclenchement d'envoi de requête satisfait (P2) une règle mémorisée dans l'objet communicant portable, **caractérisé en ce qu'**il comprend dans l'objet communicant portable des étapes de :
déterminer (P7 - P8) si des données de contenu sont disponibles en comparant (P7) des données (Drq) caractérisant l'objet communicant portable à des descriptifs de contenu (Ddc) qui sont associés aux données de contenu (Dc) mémorisées dans le moyen serveur et envoyées par le moyen serveur en réponse à la requête de disponibilité de contenu, et envoyer (P11) des identificateurs de contenu (Idc) relatifs aux données de contenu disponibles déterminées (Dc) afin que le moyen serveur transmette (P12) lesdites données de contenu disponibles déterminées à l'objet communicant portable.

2. Procédé conforme à la revendication 1, selon lequel à la réception des données de contenu (Dc) provenant du moyen serveur (SAC, BD), l'objet communicant portable traite (P13) les données de contenu reçues et envoie une notification (NTF) au moyen serveur.

3. Procédé conforme à la revendication 1 ou 2, selon lequel le moyen serveur (SAC, BD) envoie successivement pour chacune d'applications implémentées dans l'objet communicant portable (Cn) une commande de traitement des données de contenu en réponse à une notification d'acquittement (AQ) du traitement de données (Dc) pour l'application précédente, transmise par l'objet communicant portable.

4. Système pour télécharger des données de contenu (Dc) mises à disposition dans un moyen serveur (SAC, BD) vers des objets communicants portables (C1 - CN) à travers un réseau de radiocommunications (RR) pendant une campagne de téléchargement de données (TCA), comprenant dans chaque objet communicant portable (Cn), un moyen (Ag) pour initier un téléchargement de données vers ledit objet par un envoi d'une requête de disponibilité de contenu vers le moyen serveur dès qu'au moins un élément de déclenchement d'envoi de requête satisfait une règle mémorisée dans l'objet communicant portable, **caractérisé en ce qu'**il comprend dans chaque objet communicant portable (Cn) :
un moyen (Ag) pour déterminer si des données de contenu sont disponibles en comparant des données (Drq) caractérisant l'objet communicant portable à des descriptifs de contenu (Ddc) qui sont associés aux données de contenu (Dc) mémorisées dans le moyen serveur et envoyées par le moyen serveur en réponse à la requête de disponibilité de contenu, et

5. Système conforme à la revendication 4, **caractérisé en ce que** les objets communicants sont des cartes à puce d'usager (C1 - CN) amovibles de terminaux mobiles (T1 - TN).

6. Système conforme à la revendication 4, **caractérisé en ce que** les objets communicants sont des terminaux mobiles (T1 - TN).

7. Système conforme à l'une quelconque des revendications 4 à 6, **caractérisé en ce que** le réseau de radiocommunications est un réseau à accès multiple à répartition par codes CDMA.

8. - Programme apte à être mis en oeuvre dans un système de communication pour télécharger des données de contenu (Dc) mises à disposition dans un moyen serveur (SAC, BD) vers des objets communicants portables (C1 - CN) à travers un réseau de radiocommunications (RR) pendant une campagne de téléchargement de données (TCA), le programme comportant dans chaque objet communicant portable des instructions pour initier par un objet communicant portable (Cn) un téléchargement de données vers ledit objet par un envoi (P5) d'une requête de disponibilité de contenu vers le moyen serveur dès qu'au moins un élément de déclenchement d'envoi de requête satisfait (P2) une règle (RG) mémorisée dans un moyen pour envoyer (P11) des identificateurs de contenu (Idc) relatifs aux données de contenu disponibles déterminées (Dc) afin que le moyen serveur transmette (P12) lesdites données de contenu disponibles déterminées à l'objet communicant portable. l'objet communicant portable, **caractérisé en ce que** le programme comprend des instructions pour
déterminer (P7 - P8) si des données de contenu sont disponibles en comparant (P7) des données (Drq) caractérisant l'objet communicant portable à des descriptifs de contenu (Ddc) qui sont associés aux données de contenu (Dc) mémorisées dans le moyen serveur et envoyées par le moyen serveur en réponse à la requête de disponibilité de contenu, et
envoyer (P11) des identificateurs de contenu (Idc) relatifs aux données de contenu disponibles déterminées (Dc) afin que le moyen serveur transmette (P12) lesdites données de contenu disponibles déterminées à l'objet communicant portable.

## Claims

1. Method for uploading content data (Cd) provided in server means (SAC, DB) to portable communicating objects (C1 - CN) via a radiocommunications network (RN) during a data upload campaign (TCA), comprising initiation in a portable communicating object (Cn) of uploading of data to said object by sending (P5) a request for availability of contents to the server means as soon as at least one request dispatch initiation element (P2) complies with a rule memorised in the portable communicating object, **characterised in that** it comprises the portable communicating object of the stages of:
determining (P7 - P8) whether content data are available by comparing (P7) data (Drq) characterising the portable communicating object with descriptions of contents (Dc) which are associated with the content data (Cd) memorised in the server means and sent by the server means in response to the content availability request and sending (P11) content identifiers (Ci) relating to the determined available content data (Cd) so that the server means transmit (P12) said determined available content data to the portable communicating object.

2. Method according to claim 1, according to which, on reception of the content data (Cd) originating from the server means (SAC, DB), the portable communicating object processes (P13) the content data received and sends a notification (NTF) to the server means.

3. Method according to claim 1 or 2, according to which the server means (SAC, DB) successively sends for each of the applications implemented in the portable communicating object (Cn) a content data processing command in response to a notification of acknowledgement (AQ) of processing of data (Dc) for the preceding application, transmitted by the portable communicating object.

4. System for uploading content data (Cd) provided in a server means (SAC, DB) to portable communicating objects (C1 - Cn) via a communications network (CN) during a data upload campaign (TCA) comprising in each portable communicating object (Cn), a means (Ag) of initiating uploading of data to said object by dispatching a content availability request to the server means as soon as at least one dispatch request initiation element complies with a rule memorised in the portable communicating object, **characterised in that** it comprises in each portable communicating object (Cn):
a means (Ag) of determining whether content data are available by comparing data (Drq) characterising the portable communicating object with descriptions of contents (Dc) which are associated with the content data (Cd) memorised in the server means and sent by the server means in response to the content availability request and

5. System according to claim 4, **characterised in that** the communicating objects are detachable user chip cards (C1 - CN) of mobile terminals (T1 - TN).

6. System according to claim 4, **characterised in that** the communicating objects are mobile terminals (T1 - TN).

7. System according to any of claims 4 to 6, **characterised in that** the radiocommunications network is a code division multiple access network CDMA.

8. Program capable of being implemented in a communications system in order to upload content data (Cd) provided in a server means (SAC, DB) to portable communicating objects (C1 - CN) via a radiocommunications network (RN) during a data upload campaign (TCA), with the program comprising in each portable communicating object instructions in order to initiate by means of a portable communicating object (Cn) uploading of data to said object by dispatch (P5) of a content availability request to the server means as soon as at least one request dispatch initiation element complies (P2) with a rule (RG) memorised in a means for dispatching (P11) content identifiers (Ci) relating to the determined available content data (Cd) so that the server means transmit (P12) said determined available content data to the portable communicating object.

## Patentansprüche

1. Verfahren zum Herunterladen von in einem Servermittel (SAC, BD) zur Verfügung gestellten Inhaltsdaten (Dc) an tragbare kommunizierende Objekte (C1 - CN) durch ein Funkkommunikationsnetz (RR) während einer Kampagne zur Datenfernladung (TCA), das eine Einführung in ein tragbares kommunizierendes Objekt (Cn) einer Datenfernladung zu dem besagten Objekt durch einen Versand (P5) einer Anfrage nach Verfügbarkeit von Inhalt zum Servermittel umfaßt, sobald mindestens ein Element zur Auslösung der Anfrage eine im tragbaren kommunizierenden Objekt gespeicherte Regel erfüllt (P2), **dadurch gekennzeichnet, daß** es im tragbaren kommunizierenden Objekt folgende Etappen umfaßt:
Bestimmen (P7 - P8), ob Inhaltsdaten verfügbar sind durch Vergleich (P7) der Daten (Drq), die das kommunizierende tragbare Objekt auszeichnen, mit Inhaltsbeschreibungen (Ddc), die den Inhaltsdaten (Dc) zugeordnet sind, die im Servermittel gespeichert sind und vom Servermittel als Antwort auf die Anfrage auf Verfügbarkeit von Inhalt geschickt werden, und Schicken (P11) der Inhaltskennungen (Idc) bezüglich der verfügbaren bestimmten Inhaltsdaten (Dc), damit das Servermittel die besagten verfügbaren bestimmten Inhaltsdaten an das tragbare kommunizierende Objekt übermittelt (P12).

2. Verfahren nach Anspruch 1, **dadurch gekennzeichnet, daß** bei Erhalt der vom Servermittel (SAC, BD) kommenden Inhaltsdaten (Dc) das tragbare kommunizierende Objekt die erhaltenen Inhaltsdaten verarbeitet (P13) und eine Mitteilung (NTF) an das Servermittel schickt.

3. Verfahren nach Anspruch 1 oder 2, **dadurch gekennzeichnet, daß** das Servermittel (SAC, BD) nacheinander für jede der im tragbaren kommunizierenden Objekt (Cn) implementierte Anwendung einen Befehl zur Verarbeitung der Inhaltsdaten schickt in Antwort auf eine Mitteilung der Quittierung (AQ) der Datenverarbeitung (Dc) für die vorherige Anwendung, die vom tragbaren kommunizierenden Objekt übermittelt wird.

4. Verfahren zum Herunterladen von in einem Servermittel (SAC, BD) zur Verfügung gestellten Inhaltsdaten (Dc) an tragbare kommunizierende Objekte (C1 - CN) durch ein Funkkommunikationsnetz (RR) während einer Kampagne zur Datenfernladung (TCA), das in jedem tragbaren kommunizierenden Objekt (Cn) ein Mittel (Ag) umfaßt zum Initiieren einer Datenfernladung an das besagte Objekt durch Schicken einer Anfrage auf Verfügbarkeit von Inhalt an das Servermittel, sobald mindestens ein Element zur Auslösung des Versands der Anfrage eine im tragbaren kommunizierenden Objekt gespeicherte Regel erfüllt, **dadurch gekennzeichnet, daß** es in jedem tragbaren kommunizierenden Objekt (Cn) umfaßt:
Ein Mittel (Ag) zum Bestimmen, ob Inhaltsdaten verfügbar sind durch Vergleich der Daten (Drq), die das kommunizierende tragbare Objekt auszeichnen, mit Inhaltsbeschreibungen (Ddc), die den Inhaltsdaten (Dc) zugeordnet sind, die im Servermittel gespeichert sind und vom Servermittel als Antwort auf die Anfrage auf Verfügbarkeit von Inhalt geschickt werden.

5. System nach Anspruch 4, **dadurch gekennzeichnet, daß** die kommunizierenden Objekte Nutzer-Chipkarten (C1 - CN) sind, die aus mobilen Terminalen (T1 - TN) herausnehmbar sind.

6. System nach Anspruch 4, **dadurch gekennzeichnet, daß** die kommunizierenden Objekte mobile Terminale (T1 - TN) sind.

7. System nach einem beliebigen der vorstehenden Ansprüche 4 bis 6, **dadurch gekennzeichnet, daß** das Funkkommunikationsnetz ein Netz mit mehrfachem Zugang mit Verteilung durch Codes CDMA ist.

8. Programm, das geeignet ist, in einem Kommunikationssystem eingesetzt zu werden, um Inhaltsdaten (Dc) fernzuladen, die in einem Servermittel (SAC, BD) zur Verfügung gestellt werden, an tragbare kommunizierende Objekte (C1 - CN) durch ein Funkkommunikationsnetz (RR) während einer Kampagne zum Fernladen von Daten (TCA), wobei das Programm in jedem tragbaren kommunizierenden Objekt Anweisungen umfaßt zum Initiieren durch ein tragbares kommunizierendes Objekt (Cn) einer Datenfernladung an das besagte Objekt durch ein Schicken (P5) einer Anfrage auf Verfügbarkeit von Inhalt an das Servermittel, sobald mindestens ein Element zum Auslösen des Versands der Anfrage eine Regel (RG) erfüllt (P2), die in einem Mittel gespeichert ist zum Schicken (P11) der Inhaltskennungen (Idc) bezüglich der verfügbaren bestimmten (Dc) Inhaltsdaten, damit das Servermittel die besagten verfügbaren bestimmten an das tragbare kommunizierende Objekt übermittelt (P12).
